# EUROPEAN PATENT SPECIFICATION

(11) **EP 0 734 345 B1**
(45) Date of publication and mention of the grant of the patent: **10.11.1999**
(21) Application number: 95904804.2
(22) Date of filing: 14.12.1994
(51) Int. Cl.: B65D 81/20, B65D 33/16

(54) **ONE-WAY VALVE AND REUSABLE-EVACUABLE ENCLOSURE**
RÜCKSCHLAGVENTIL UND WIEDERVERWENDBARE, EVAKUIERBARE UMHÜLLUNG
SOUPAPE ANTI-RETOUR ET ENVELOPPE REUTILISABLE SE PRETANT AU VIDE

(30) Priority: 15.12.1993 US 168963; 18.05.1994 US 245749
(43) Date of publication of application: 02.10.1996
(73) Proprietor: New West Products, Inc., Menlo Park, CA 94025 (US)
(72) Inventor: SWEENEY, Gerald, W., Atherton, CA 94027 (US); HADDEN, David, M., Los Altos, CA 94022 (US)
(74) Representative: Hector, Annabel Mary
(86) International application number: US9413918
(87) International publication number: WO9516619

(56) References cited:
- JP-A- 4 189 752
- JP-A- 4 242 544
- US-A- 3 351 270
- US-A- 3 403 696
- US-A- 3 454 182
- US-A- 4 372 921
- US-A- 4 712 574
- US-A- 4 871 264
- US-A- 5 080 155
- US-A- 5 142 970
- US-A- 5 203 458
- US-A- 5 282 322

## Description

### FIELD OF THE INVENTION

The present invention relates to evacuable storage containers for storing both compressible articles, such as linen and clothing, and non-compressible articles, such as guns.

### BACKGROUND

Collapsible, evacuable storage containers typically include a flexible, impermeable bag, an opening through which to place an article in the bag, and a fixture through which to evacuate excess air. A user places an article into the enclosure through the opening, seals the opening, and then evacuates the air through the fixture. With the chamber thus evacuated, the article contained therein may be significantly compressed, so that it is easier to transport and requires substantially less storage space.

Collapsible, evacuable storage containers are beneficial for reasons in addition to those associated with compression of the stored article. For example, removal of the air from the storage container inhibits the growth of destructive organisms, such as moths, silverfish, and bacteria, which require oxygen to survive and propagate. Moreover, such containers, being impervious to moisture, inhibit the growth of mildew. Collapsible, evacuable storage containers are also useful for non-compressible articles because they reduce the volume of air and water vapor to which the article is exposed during storage and thereby limit deterioration from, for example, corrosion.

One such container was developed by James T. Cornwell (U.S. Patent No. 5,203,458). That patent described a disposable, evacuable container for sealing and compressing contaminated surgical garments for ease of storage and transportation prior to disposal. That device requires a special vacuum source to evacuate the container and a heat source to provide an air-tight seal across the opening, and is designed to be used only once before it is discarded.

Another such enclosure is described in a patent to Akihiro Mori and Ichiro Miyawaki (Japanese Patent No. 1767786). In that device, the opening through which the stored article is placed requires the application of a heat source, such as a home iron, to form an effective seal. Because the resulting seal is permanent, the sealed portion of the container must be cut away each time the container is opened, resulting in a waste of material, a container whose volume decreases with each use, and a limit on the number of times the container may be reused. Moreover, the use of a heat source to seal the container may be hazardous, and increases the complexity and difficulty of providing a seal.

A valve for bringing air into pressurized fluid lines is disclosed in U.S. Patent No. 4,712,574, which describes a valve which allows air to pass through the valve in one direction but prevents any air or fluid from escaping in the other direction. The valve has a curved shape and is held together by a housing designed to be connected to a pressurized fluid line. A flexible valve seat plate deforms to a curved shape when the valve is forced into a closed condition. The presence of the housing and the curved shape of the valve make the valve unsuitable for use with a cylindrical attachment of a common household vacuum cleaner.

For the forgoing reasons, there is a need for a reusable, evacuable storage container that does not require a heat source to seal effectively and may be evacuated using a common household vacuum cleaner.

### SUMMARY

The present invention provides the one-way valve of claim 1 and the container of claim 4. The remaining claims specify preferred but optional features of the invention.

The present invention relates to a reusable, evacuable storage container that may be evacuated using a common household vacuum cleaner. A polyethylene bag forms the body of the container. The bag includes a hole, in which is inserted a one-way valve, and an opening through which to insert articles for storage, especially compressible articles such as clothing. A reusable seal is provided to pinch the opening of the bag closed, and thereby provide an air-tight seal.

The one-way valve inserted in the bag allows air to flow out of the bag and prevents air from flowing into the bag. The body of the valve is equipped with a gasket that provides a tight seal between a vacuum attachment and the valve body. A valve cap is provided to ensure an air-tight seal between the inside of the bag and the ambient environment after the bag is evacuated. A cushion positioned inside the bag prevents the stored article from being scratched when the bag is evacuated.

To store and preserve an article in a vacuum storage container in accordance with the present invention, a user places the article through the opening in the bag, and uses a seal to seal the opening. Next, using any suitable vacuum source (including most household vacuum cleaners), the user places a cylindrical vacuum attachment against the O-ring in the valve body, turns on the vacuum source, and thereby extracts the excess air from the bag. If the article to be stored is compressible, such as linen or clothing, removal of the excess air greatly reduces the volume of the articles.

Once the excess air has been extracted, the vacuum attachment may be removed. Without the vacuum source applied to the valve body, the one-way valve closes due to the pressure differential between the outside and the inside of the bag. The user then replaces the valve cap to ensure the integrity of the seal, and is so doing forces the one-way valve against the valve seat, ensuring the integrity of the valve seal. With the contents of the bag thus sealed from the surrounding environment, the bag may be stored or shipped.

### BRIEF DESCRIPTION OF THE DRAWINGS

Figure 1 shows a vacuum enclosure in accordance with the present invention;
Figure 2 shows a bag in accordance with the present invention;
Figure 3 shows a cross-section of a valve assembly coupled with a cylindrical vacuum attachment;
Figure 4A is a bottom view of a valve body;
Figure 4B is a top view of the valve body;
Figure 5 shows a view of a valve showing a surface of a diaphragm;
Figure 6 shows a detailed view of a seal for pinching closed an opening of the bag;
Figure 7 shows the seal snapped closed; and
Figures 8, 9, 10, 11A-11C and 12A-12E show cross-sectional views of alternative seals which may be used in accordance with the invention.
Figure 13 shows a graph of the force multiplier which is obtained with the seal shown in Figures 12A-12D.
Figures 14A-14D illustrate a problem that may occur with the seal shown in Figures 12A-12E.
Figures 15A-15D show another embodiment of a seal according to the invention.

### DETAILED DESCRIPTION

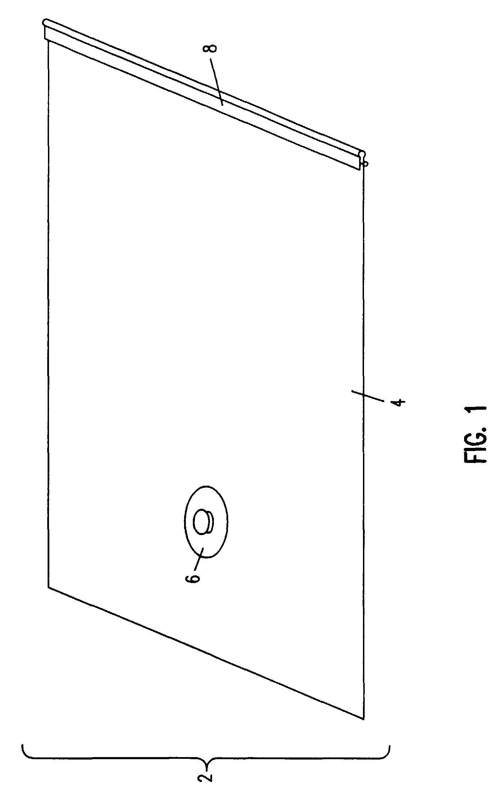

Figure 1 shows a vacuum enclosure 2 in accordance with the present invention. Vacuum enclosure 2 includes a bag 4, a valve assembly 6, and a seal 8. Compressible articles, such as linen or clothing, may be enclosed in bag 4 and sealed from the ambient environment via seal 8 and valve assembly 6. Excess air in bag 4 may then be evacuated through valve assembly 6 so as to compress the contents of bag 4.

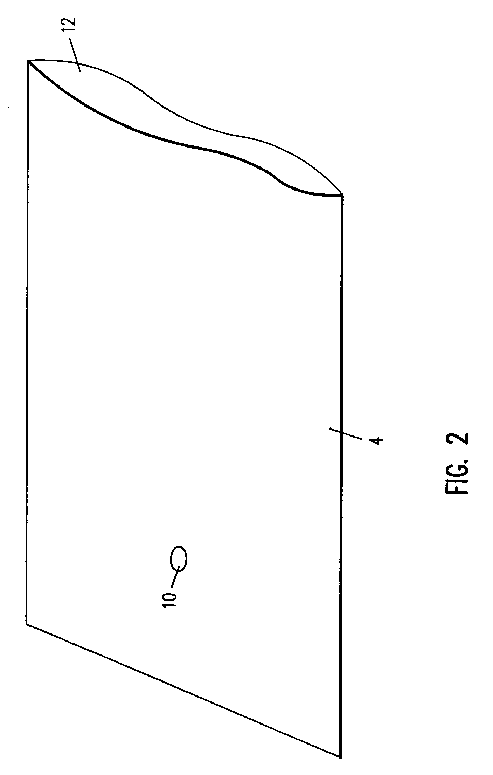

Bag 4, as used in the present invention, is illustrated in Figure 2. Bag 4 includes a hole 10 in which to install valve assembly 6, and an opening 12 through which articles may be placed for storage.

Because vacuum enclosure 2 is intended to remain evacuated for long periods of time, bag 4 must be made of a material that is impermeable by air. Moreover, bag 4 must be flexible and tough so that it collapses easily around stored articles and may be used a number of times without degradation of its air-tight qualities. In one embodiment of the present invention, the material used is "Curlon," which is a flexible, formable material comprising a laminate of polyethylene and nylon, available from Curwood, Inc. In another embodiment, bag 4 is made of tri-extruded polyethylene. Of course, many other materials and combinations of materials may be used, as is well known to those skilled in the art.

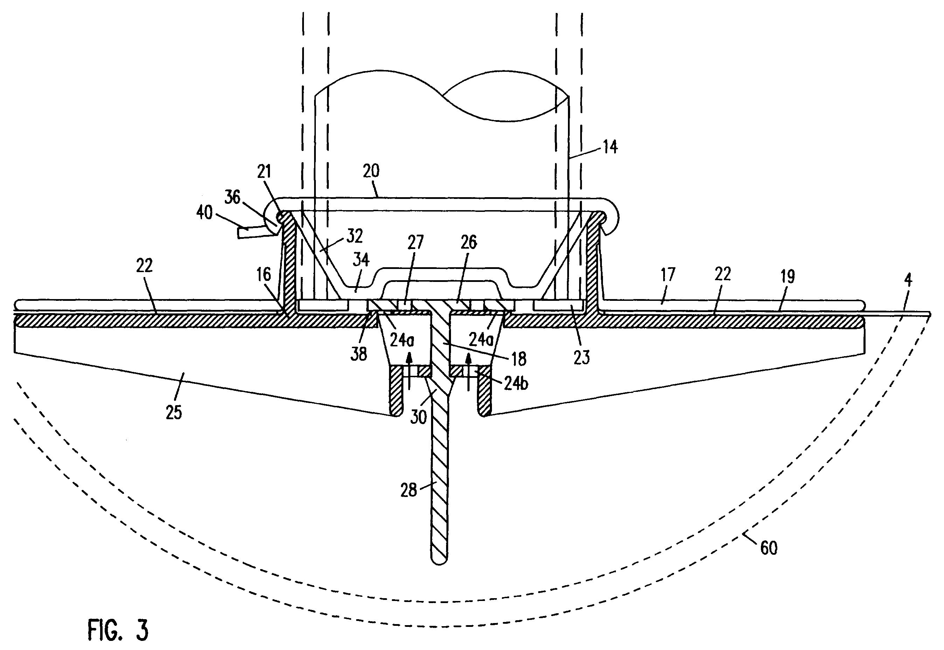

Figure 3 shows a cross-section of valve assembly 6 and a cylindrical vacuum attachment 14. Valve assembly 6 includes a valve body 16, a valve body retaining ring 17, a valve 18, and a snap-on cap 20.

Valve body 16 is placed into bag 4 and through hole 10 so that a rim 21 protrudes through hole 10. A surface 22 of valve body 16 is then sealed to an area of bag 4 surrounding hole 10. Many methods are available to provide an air-tight bond between surface 22 and bag 4, including gluing and thermal bonding. In a preferred embodiment of the present invention, surface 22 is bonded to bag 4 by using thermal bonding to attach surface 22 to the material of bag 4. Superior results are obtained when the surfaces bonded are of similar material. In one embodiment of the present invention, the interior of bag 4 and surface 22 of valve body 16 are both polyethylene. Valve body retaining ring 17 is then snapped over the protruding portion of valve body 16, trapping bag 4 between surface 22 of valve body 16 and a surface 19 of valve body retaining ring 17, thus providing an impermeable seal between the inside of bag 4 and surface 22 of the valve body.

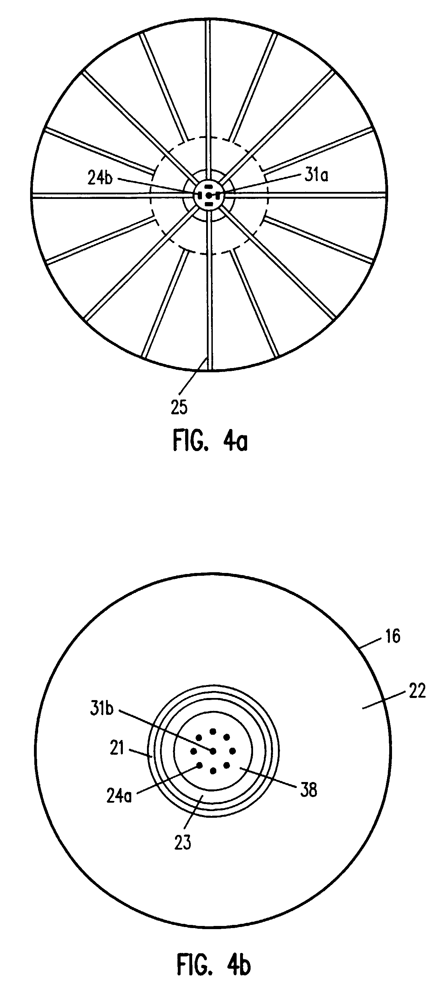

Figure 4a is a bottom view of valve body 16; Figure 4b is a top view of valve body 16. Air holes 24a and 24b are provided in valve body 16 to allow air to flow in the direction indicated by the arrows of Figure 3, thus allowing air to be evacuated from the interior to the exterior of bag 4. As is shown in Figures 3 and 4a, valve body 16 is provided with vanes 25, which prevent the material or the contents of bag 4 from obstructing air holes 24b while air is being extracted.

Referring again to Figure 3, a valve 18 is provided in valve body 16 to allow air to flow in the direction of the arrows, and to prevent air from flowing through air holes 24a in the direction opposite that indicated by the arrows. Valve 18 is made of an elastic material, such as silicone rubber, and includes a diaphragm 26, diaphragm slots 27, a stem 28, and a retainer 30. When assembling valve assembly 6, stem 28 is inserted into valve assembly 6 through holes 31a and 31b. Retainer 30, being elastic, compresses as stem 28 is pulled through hole 31a. Once through hole 31a, retainer 30 regains its shape, and thereby secures valve 18 in valve assembly 6.

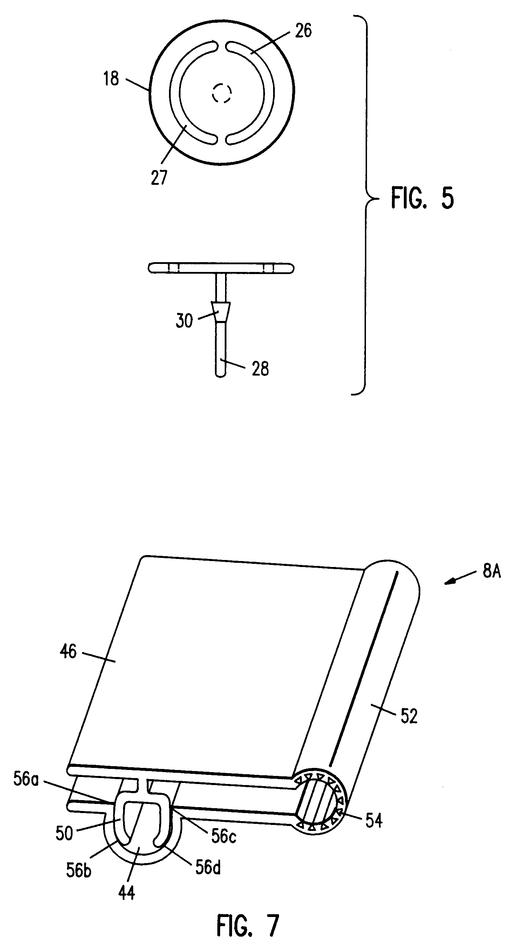

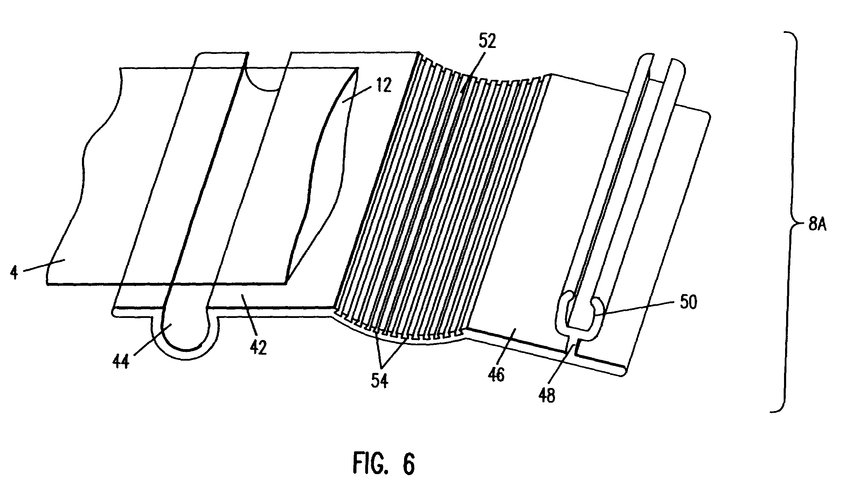

Figure 5 shows a view of valve 18 showing a surface of diaphragm 26. Diaphragm 26 is a flexible membrane that flexes to allow air to flow out of bag 4 through air holes 24a, but bars the passage of air into bag 4 through holes 24a. Diaphragm slots 27 reduce the rigidity of diaphragm 26, allowing diaphragm 26 to open freely. Slots 27 therefore reduce the restriction of air flow through valve 6 so that air may be easily extracted from bag 4.

As shown in Figures 3 and 4b, valve body 16 is equipped with an O-ring 23, which provides a seal between vacuum attachment 14 and valve body 16. As indicated by the dotted lines of Figure 3, O-ring 23 is designed to provide a seal for a variety of cylindrical vacuum attachments which typically range in diameter from approximately 2.22 cm (seven-eighths (7/8) of an inch) to approximately 2.54 cm (one (1) inch) in typical household vacuum cleaners. Moreover, tolerances are provided for O-ring 23 and valve body 16 so that vacuum attachments with small imperfections, such as chips and dents, may nevertheless achieve an adequate seal with valve body 16. Of course, valve body 16 may be designed to provide for other shapes and diameters of vacuum attachments.

Cap 20 is provided with a flexible protrusion 32 on its underside, which is in turn provided with a ring-shaped surface 34. When cap 20 is pressed into place, a lip 36 locks onto rim 21. Once cap 20 is snapped in place, flexible protrusion 32 is forced against diaphragm 26 so that diaphragm 26 is compressed between ring-shaped surface 34 and valve seat 38. The compression of diaphragm 26 provides an effective air-tight seal over air holes 24a, thus ensuring that air will not enter bag 4 when bag 4 is evacuated. In another embodiment of the present invention, protrusion 32 is replaced with a cylinder of dense foam that is sandwiched between cap 20 and diaphragm 26. A lip 40 on cap 20 provides leverage to ease removal of cap 20. To provide a more effective seal, it may be desirable in some situations to replace snap-on cap 20 with a screw cap.

It may be desirable to store articles which could be scratched or marred by vanes 25 and the other components of valve assembly 6 inside of bag 4. As shown in Figure 3, a cushion element 60 may be used to prevent this from happening. Cushion element 60 may be made of an open cell polyethylene foam which is heat sealed to bag 4. Other plastic foams may be used but they should be open-celled to allow a free flow of air through valve 18.

As noted above, the article to be stored is placed into bag 4 through opening 12. Opening 12 is then hermetically sealed. It is important that the hermetic seal be as effective as possible and that it be capable of preventing the entry of air into the bag over long periods of time. Figures 6-10, 11A-11C and 12A-12D illustrate several types of seals which may be used.

Figure 6 shows a hinged seal 8A for pinching opening 12 of bag 4 closed, and thereby providing an air-tight seal. Seal 8A is preferably an extrusion of acrylonitrile-butadiene-styrene copolymer (ABS) plastic, although other plastics such as polyvinylchloride (PVC), impact modified styrenes, polycarbonates and urethanes may also be used. Seal 8A is manufactured using techniques well known to those skilled in the art. Seal 8A includes a strip 42 having a slot 44 of C-shaped cross-section running the length of strip 42, a second strip 46 having a perpendicular ridge 48 running the length of strip 46 and a bifurcated flange 50 along the length of ridge 48, and a hinge 52 joining strips 42 and 46.

Hinge 52 is of semi-circular cross-section. The inside surface of the semi-circular cross-section of hinge 52 includes a plurality of channels 54 running parallel to strips 42 and 46. Channels 54 each have a substantially triangular cross-section, such that each is widest at its bottom surface and narrowest at its top surface. As is shown in Figure 7, this structure is beneficial because the surfaces between channels 54 meet when slot 44 and flange 50 are brought together. Thus, the surfaces between channels 54 limit the curvature of any particular portion of hinge 52, and thereby distribute the curvature and associated stress over the entire hinge. This stress distribution keeps hinge 52 from becoming fatigued along a particular line, and therefore allows the hinge to be flexed many times without breaking. Of course, the cross-sectional shape of channels 54 may be other than triangular. However, the triangular shape is preferred because the surfaces between channels 54, being relatively close together, serve to minimize the curvature of any particular portion of hinge 52, and thereby limit the amount of stress felt at any particular portion of hinge 52, while the relatively wide bottom surfaces of channels 54 serve to distribute stresses associated with the flexion of hinge 52 over a larger portion of binge 52 than would narrower bottom surfaces.

As illustrated in Figure 6, bag 4 is laid across strip 42 so that bag 4 traverses slot 44. To ensure an effective seal along the length of opening 12, seal 8A should be long enough to extend slightly beyond the edges of bag 4. Seal 8A is then bent along hinge 52 so that flange 50 and slot 44 snap together, thereby pinching bag 4 between flange 50 and slot 44. Referring again to Figure 7, flange 50 and slot 44, both being elastic members, exert pressure on bag 4 and thereby maintain an air-tight seal. Flange 50 and slot 44 are designed to pinch opening 12 closed across four distinct lines of compression. These lines are shown in the cross-section of Figure 7 as points 56a, 56b, 56c, and 56d. The elasticity of slot 44 exerts pressure at points 56a and 56c, while the elasticity of flange 50 exerts pressure at points 56b and 56d. The use of multiple lines of compression increases the integrity of the seal. In fact, it appears that the integrity of the seal increases (i.e., the seal becomes tighter) as a vacuum is applied to the inside of the bag. (For the sake of clarity, bag 4 is not shown in Figure 7.)

In addition, bag 4 is stretched between points 56a, 56b, 56c and 56d. This stretching increases the contact force between bag 4 and flange 50. The degree of impermeability of seal 8A is determined both by the absolute force per unit area imposed perpendicular to the sides of bag 4 within the confines of slot 44 and flange 50 and the lateral distance over which the force is applied.

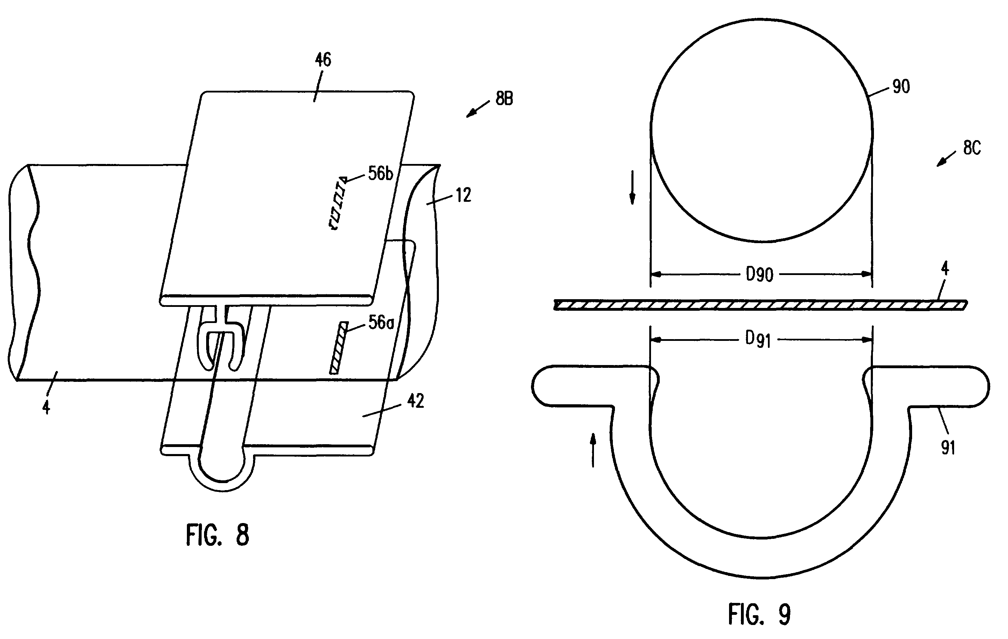

Figure 8 shows a second seal 8B for use in accordance with another embodiment of the present invention. In this embodiment, opening 12 is sealed in substantially the same manner as in the previous embodiment, except that hinge 52 is eliminated. Instead, strips 42 and 46 are bonded to bag 4 along bond lines 56a and 56b, using techniques well known to those skilled in the art. It is preferable that bond lines 56a and 56b do not extend along the entire length of opening 12, as such an arrangement may render bag 4 difficult or impossible to open without damaging bag 4. The use of seal 8B has the advantage of providing an evacuable enclosure as a single unit.

Alternatively, strips 42 and 46 could be separated from each other and from bag 4 to provide a two-piece sealing mechanism, i.e., hinge 52 could be eliminated (Figures 6 and 7) and bond lines 56a and 56b could be eliminated (Figure 8).

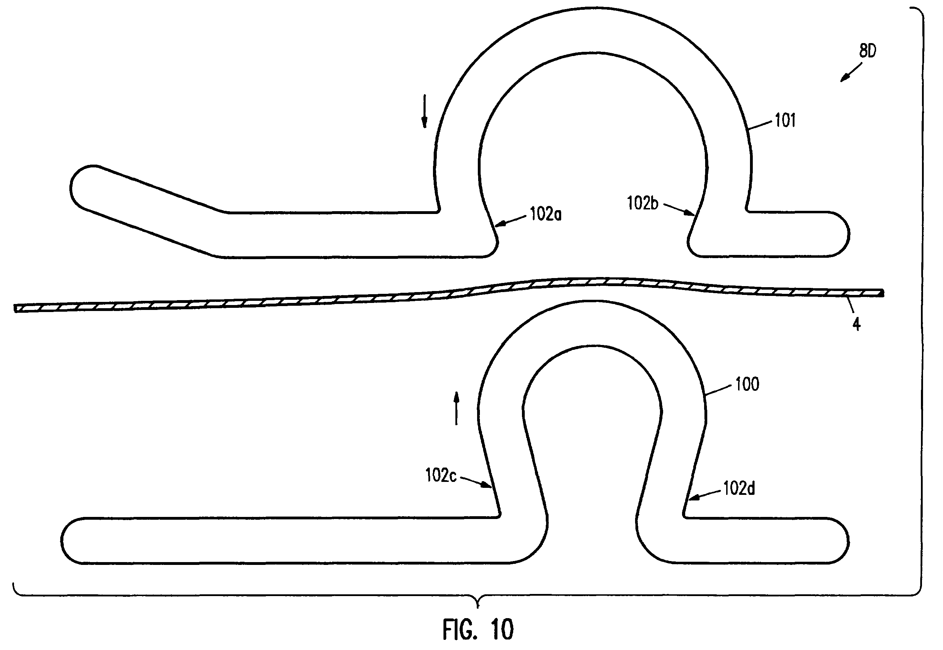

Figures 9 and 10 illustrate alternative seals which may be less expensive to manufacture. In Figure 9, a seal 8C, shown in cross section, includes a rod 90 and a channel member 91. Preferably, the diameter D₉₀ of rod 90 is slightly greater than the diameter D₉₁ of channel member 91, so that when rod 90 is seated in channel member 91, bag 4 is firmly gripped. In one embodiment, for example, D₉₀ = 0.76 cm (0.300 inches) and D₉₁ = 0.734 cm (0.289 inches). Rod 90 may also be hollow and may be formed of a rigid material such as extruded aluminum. This may be particularly useful in applications where resistance to longitudinal flexing is desired.

Figure 10 illustrates a cross-sectional view of a seal 8D which includes an inner channel member 100 and an outer channel member 101. A possible disadvantage of seal 8D is that the pressure against bag 4 occurs at points (shown as 102a, 102b, 102c and 102d) where inner channel member 100 and outer channel member 101 are capable of maximum flexure. This is distinguishable, for example, from points 56a, 56b, 56c and 56d shown in Figure 7. At points 56a and 56c, the flexure of slot 44 is at a maximum but the flexure of bifurcated flange 50 is relatively small. At points 56b and 56d, the flexure of bifurcated flange 50 is at a maximum whereas the flexure of slot 44 is relatively small. This has the effect of increasing the pressure on bag 4 at slots 56a, 56b, 56c and 56d.

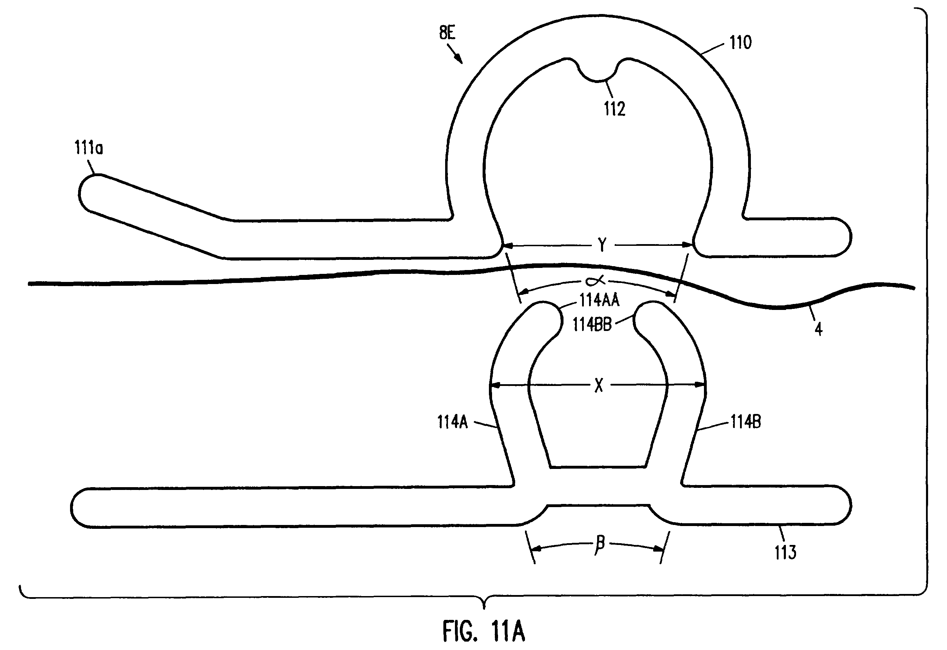

Figures 11A-11C show cross-sectional views of a seal 8E for use in accordance with yet another embodiment of the invention. Like seal 8A shown in Figure 6, seal 8E is preferably an extrusion of ABS plastic, although other plastics such as polyvinylchloride (PVC), impact modified styrenes, polycarbonates and urethanes may also be used. Seal 8A is manufactured using techniques well known in the art. Seal 8E includes a C-shaped section 110, which runs the length of a strip 111. A rib 112 runs longitudinally along the interior of the C-shaped section 110.

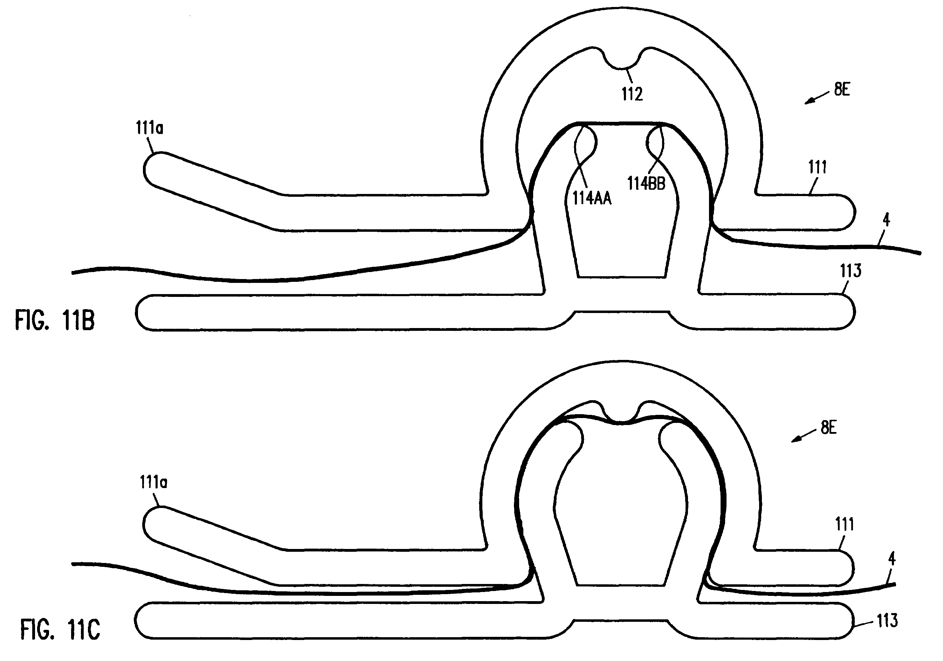

A second strip 113 has a pair of flanges 114A and 114B protruding from it. As shown in Figures 11B and 11C, flanges 114A and 114B fit into the C-shaped section 110 when seal 8E is engaged across bag 4.

To maximize the integrity of the seal, the relative proportions of the C-shaped section 110 and the flanges 114A and 114B should be arranged such that bag 4 is stretched tightly across the ends of flanges as flanges 114A and 114B are inserted into the C-shaped section 110, as shown in Figure 11B. This increases the contact force between the bag 4 and the edge of rib 112 and the length of the gas migration path when seal 8E is closed (Fig. 11C). Furthermore, flanges 114A and 114B should be long enough that the ends of the flanges 114A and 114B are positioned adjacent the rib 112 when the seal 8E is closed. This likewise ensures that bag 4 is stretched tightly across the rib 112 and increases the tightness of the seal. A raised lip 111a of strip 111 provides a gap where a coin, for example, may be inserted to facilitate the separation of strips 111 and 113.

Another significant factor is the angle α of the opening of the C-shaped section 110, shown in Figure 11A. Angle β represents the angle between flanges 114A and 1145, as likewise shown in Figure 11A. Angles α and β, along with the amount of interference of flanges 114A and 114B at their maximum width (designated X in Fig. 11A) and C-shaped section 110 at the width of its opening or entrance (designated Y in Fig. 11A) control the overall permeability of seal 8E. The dimensions selected are a compromise between making the seal as effective as possible and not exceeding the maximum amount of force that can reasonably be used to force strips 111 and 113 together. The larger angles α and β are for given values of X and Y, the greater the tendency for strips 111 and 113 to be drawn (or "snapped") together once they have been pressed together past their points of maximum flexure. While this provides the best tactile feedback that strips 111 and 113 are properly mated, the trade-off is that more force is required to force strips 111 and 113 together past the point of maximum flexure and, once in their final mated position, the less the pressure is that holds the two sides of bag 4 in contact with each other.

By adding rib 112 to C-shaped section 110, a compromise can be reached wherein an individual would have a good tactile sense that strips 111 and 113 are "snapped" together while maintaining a reasonable degree of seal with larger angles α and β.

As shown in Figures 11B and 11C, as flanges 114A and 114B are inserted into C-shaped section 110, bag 4 is stretched across tips 114AA and 114BB. Before a full interlock position is reached, that portion of bag 4 which is stretched between tips 114AA and 114BB is further stretched by contact with rib 112. Since C-shaped section 110 and flanges 114A and 114B are past their points of maximum flexure at the point where tips 114AA and 114BB approach rib 112 (Fig. 11C), little added force is needed to complete the insertion. Angles α and β must be chosen large enough to ensure that, once strips 111 and 113 have been pressed together past the point of maximum flexure, enough force is produced in the direction normal to the direction of insertion to overcome the resistance to further insertion that occurs when rib 112 comes into contact with the stretched portion of bag 4. Angle α may be in the range of 19-34 degrees and angle β may be in the range of 9-34 degrees. X may be in the range 0.711-0.787 cm (0.280-0.310 inches) and Y may be in the range 0.610-0.686 cm (0.240-0.270 inches). If α is 19 degrees, β may be 9 degrees; and if α is 26 degrees, β may be 34 degrees. In a preferred embodiment, α is 25 degrees, β is 17 degrees, X is 0.749 cm (0.295 inches) and Y is 0.648 cm (0.255 inches).

An almost infinite range of angles and dimensions can be used, depending on the amount of force needed for the seal and the amount of force acceptable to push the two parts together. Generally speaking, using an angle α of 34° and an angle β of 34° along with an X dimension of 0.787 cm (0.310 inches) and a Y of 0.610 cm (0.240 inches) would yield the best overall seal but the seal would probably be quite difficult to close. Conversely, if each of these dimensions is taken at the other end of the ranges described above, the seal would be less effective but would be easier to close. The thickness and physical properties of the material used to make strips 111 and 113 will also have an effect on the effectiveness of the seal.

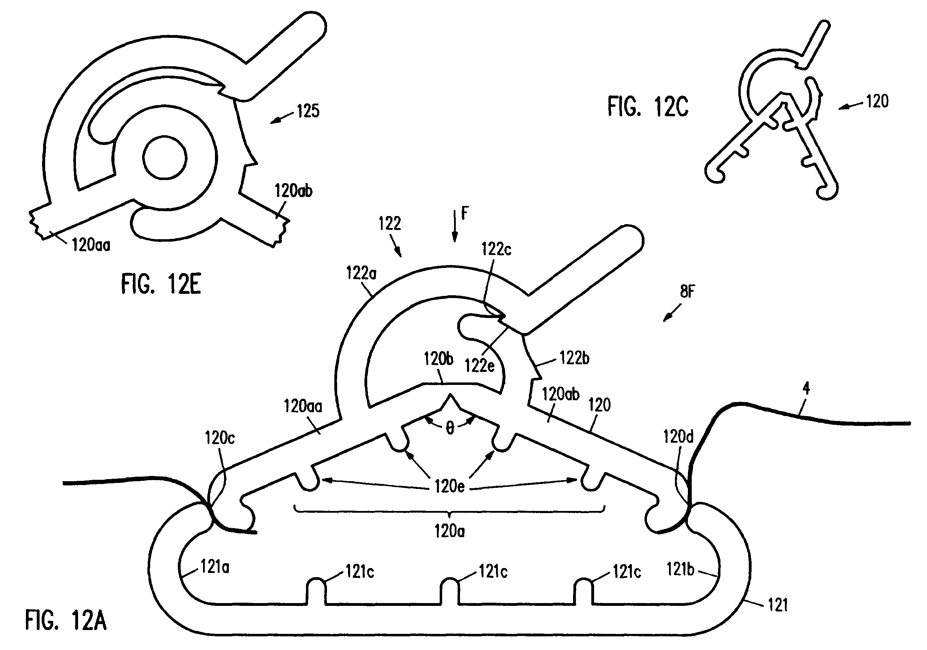

A particularly effective form of seal is illustrated in Figures 12A-12D. Seal 8F includes an expandable member 120 and a channel member 121. Expandable member 120 includes a flexible central section 120a, which in turn is divided into legs 120aa and 120ab. The thickness of central section 120a is constricted to form a hinge 120b, which separate legs 120aa and 120ab and allows central section 120a to flex. Member 120 also includes two end surfaces 120c and 120d which become more separated from each other as central section 120a is flexed so as to increase an angle θ (shown in Figure 12A) between legs 120aa and 120ab. Ribs 120e are formed on the bottom surface of member 120.

In this embodiment, hinge 120b is formed by a V-shaped notch constriction that is confined to a very limited length of central section 120a. Various other lengths, shapes and thicknesses of constrictions can also be used depending on the characteristics of the plastic used and its flow characteristics through various extruded cross-sectional thicknesses. For some plastics, it may be necessary to replace the V-shaped notch with a long, thin restriction whose cross-sectional design is constructed such that its moment of inertia (resistance to bending) is designed to match the bending moment applied when expandable member 120 is flexed during insertion into channel member 121.

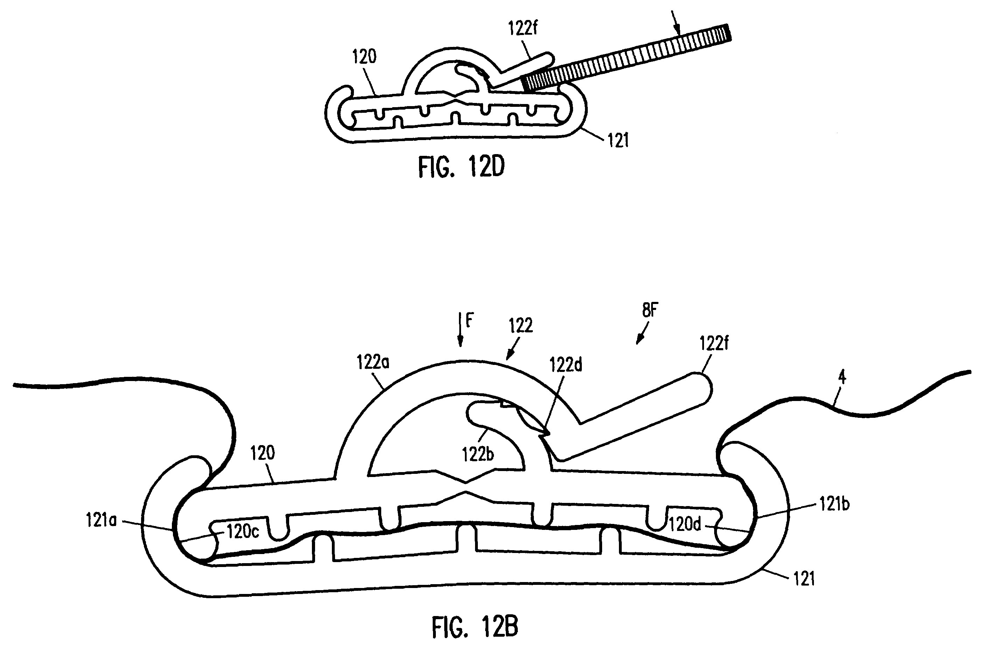

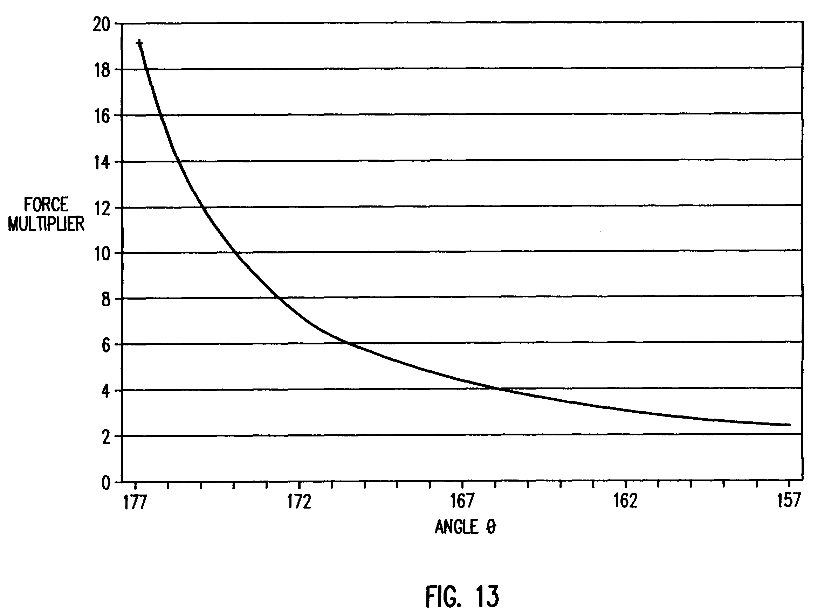

Channel member 121 includes inside surfaces 121a and 121b and a plurality of ribs 121c which are formed on the inside surface of channel member 121. As shown in Figure 12B, when expandable member 120 is pressed into channel member 121, end surfaces 120c and 120d are forced apart and engage inside surfaces 121a and 121b, respectively, as angle θ increases. The contact forces which grip bag 4 at these locations can be made extremely high as a result of the force multiplication obtained from the hinged construction of expandable member 120. Figure 13 illustrates a graph showing the "force multiplier" (i.e., the ratio of the force between end surfaces 120c, 120d and inside surfaces 121a, 121b, respectively, and the insertion force F shown in Figure 12B) as a function of the angle θ. As is apparent from Figure 13, the force multiplier increases rapidly as the angle θ approaches 180 degrees. It should be noted, however, that while the graph of Fig. 13 demonstrates the general principle of the force multiplier, and in particular the marked increase of the force multiplier as the angle θ approaches 180°, the actual numbers and shape of the curve are approximate only as they do not take into account the modulus of elasticity of the material of which expandable member 120 is constructed.

Moreover, as is apparent from Figures 12A and 12B, as expandable member 120 is inserted into channel member 121, end surfaces 120c and 120d rotate in opposite directions, thereby stretching bag 4. This stretching action brings the surface of bag 4 into firm contact with the ends of ribs 120e and 121c and creates additional sealing regions at each of these locations. As a result, there are a plurality of sealing locations which prevent air from entering bag 4.

When seal 8F is closed, expandable member 120 is held in place by a ratchet mechanism 122 which includes an outer member 122a and an inner member 122b. Inner member 122b has a stop 122c which engages outer member 122a before insertion (Figure 12A), and a stop 122d which engages outer member 122a when seal 8F is fully engaged (Figure 12B).

Expandable member 120 and channel member 121 are preferably extruded from ABS with an izod of 6 or greater, although polypropelene, polycarbonate, nylon and numerous other plastics could be used. In the preferred embodiment, the shape of expandable member immediately following extrusion is illustrated in Figure 12C. Expandable member 120 is initialized to the shape shown in Figure 12A by engaging outer member 122a and stop 122c. Outer member 122a is formed with a raised lip 122f, which allows the seal to be opened with a coin or other object, as shown in Figure 12D.

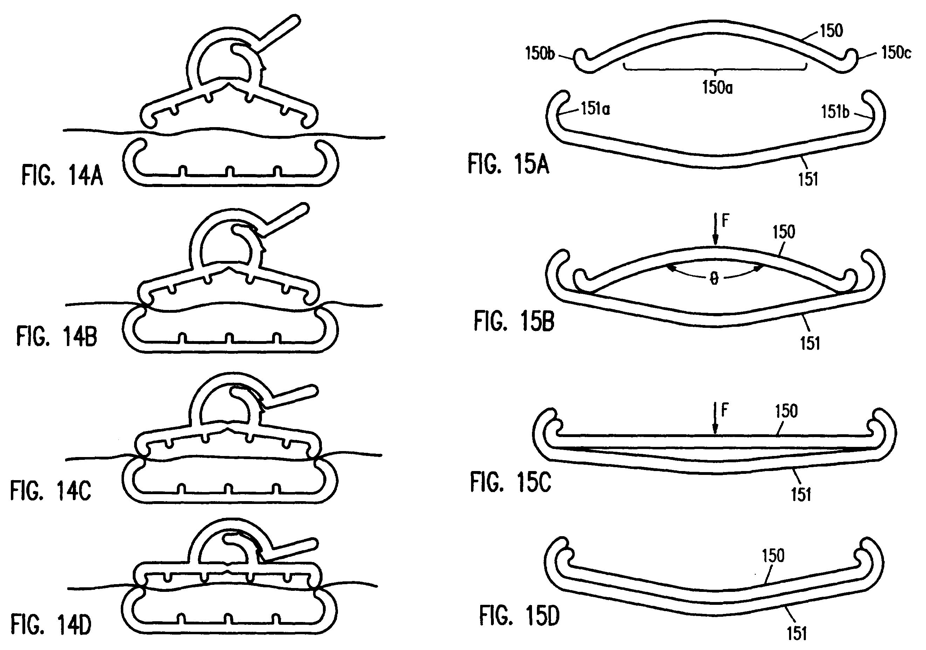

The optimal performance of seal 8F is achieved if bag 4 is stretched slightly when it is first inserted into channel member 121 (see Figure 12A). To achieve this, the distance between end surfaces 120c and 120d should be slightly greater than the width of the mouth of channel member 121. Thus, expandable member 120 is "forced" into channel member 121 before surfaces 120c, 121a and 120d, 121b begin to engage each other. A surface 122e on inner member 122b provides static friction against outer member 122a and prevents expandable member from expanding prematurely expanding before and surfaces 120c and 120d are inside channel member 121. (This possibility is illustrated in the sequence shown in Figures 14A-14D.) This risk of this eventuality is greater if bag 4 is made of a relatively stiff material.

Numerous variations of this embodiment will be apparent to those skilled in the art. For example, hinge 120b could be replaced by the two-part hinge 125 illustrated in Figure 12E. Or hinge 120b could be eliminated and the entirety of central section 120a could be made flexible enough to bring the end surfaces of the expandable member into firm contact with the inside surfaces of the channel member. Such an embodiment is illustrated in Figures 15A-15D. An expandable member 150 includes a flexible central section 150a, which is formed in the shape of a bow. As expandable member 150 is pressed into a channel member 151, the bowed central section 150a is flexed, forcing end surfaces 150b and 150a apart so that they press against surfaces 151a and 151b of channel member 151.

The ratchet mechanism may be eliminated and other means may be provided for holding the expandable member in place. For example, as shown in Figure 15D, expandable member 150 will naturally be held in place as soon as the curvature of the bowed central section is reversed (i.e., the angle θ exceeds 180 degrees).

The channel member may be made from a rigid material such as a metal or, alternatively, the expandable member may be made from a rigid material. The sole requirement is that the angle θ must increase as the two parts of the seal are engaged so that the force multiplier effect described above is achieved.

Once the article is enclosed in bag 4 and opening 12 is sealed, excess air in bag 4 may be evacuated through valve assembly 6. The user first removes cap 20, using tab 40 to pry it open. The user then presses vacuum attachment 14 against O-ring 23. With vacuum attachment 14 thus sealed against valve body 16, a vacuum may be applied so that air is drawn through air holes 24a and 24b. After excess air has been extracted from bag 4, vacuum attachment 14 may be removed. Diaphragm 26 will seal air holes 24a, diaphragm 26 being pressed against valve seat 38 by the pressure differential between the outside and the inside of bag 4. To ensure the integrity of the valve seal, the user then replaces cap 20, and in so doing forces ring-shaped surface 34 to compress diaphragm 26 against valve seat 38. With the contents of bag 4 thus compressed and sealed from the surrounding environment, bag 4 and its contents may be more conveniently stored or shipped. Moreover, the growth of insects, mildew, and bacteria, which may damage the contents of bag 4, is inhibited.

Although the present invention has been described in considerable detail with reference to certain preferred versions thereof, other versions are possible. For example, different materials could be used for the various elements of the container, and different valve and cap structures could be used. Moreover, while the preferred embodiment of the present invention pinches opening 12 closed across four lines of compression, other embodiments could make use of a different number of lines of compression. Therefore, the scope of the appended claims should not be limited to the description of the preferred versions contained herein.

## Claims

1. A one-way valve comprising:
a valve body (16) containing an air passage (24a, 24b);
a flexible diaphragm (26) fixed to said valve body and covering said air passage, said diaphragm arranged to allow air to pass through said air passage in only one direction; and
an annular member (23) formed of a resilient material and fixed to said valve body, said annular member being adapted so as to form a seal with a cylindrical attachment (14) of a vacuum cleaner when said attachment is manually pressed against said member on a downstream side of said air passage, thereby permitting said vacuum cleaner to draw air through said air passage, said annular member being supported by said valve body such that a surface of said annular member is generally flat when said cylindrical attachment is pressed against said member, said annular member surrounding said flexible diaphragm, said flexible diaphragm being sized and positioned within said annular member such that said flexible diaphragm is capable of functioning so as to open and close said air passage when a cylindrical attachment having a diameter within a selected range of diameters is pressed against said member.

2. The valve of claim 1 wherein said selected range of diameters is from approximately 2.22cm (seven-eighths of an inch) to approximately 2.54cm (one inch).

3. A one-way valve as claimed in claim 1 or 2, comprising:
a plurality of vanes (25) on an upstream side of said valve body for preventing said air passage from being obstructed when air is being drawn through said air passage.

4. A container comprising:
a) a flexible air-tight bag (4) having an opening (12) for inserting into said bag an item to be stored;
b) a first air-tight seal (8) across said opening; and
c) a one-way valve as claimed in any preceding claim.

5. The container of claim 4 wherein said first air-tight seal comprises:
a) a first strip (111), a slot (110) being formed in said strip; and
b) a second strip (113) having a pair of flanges (114A, 114B); said flanges and said slot being sized such that said flanges fit within said slot.

6. The container of claim 5 wherein a rib (112) is formed on an interior surface of said slot, said rib running parallel to said slot and wherein respective ends of said flanges are positioned on opposite sides of said rib when said flanges are disposed within said slot, said slot and/or said flanges comprising a flexible material.

7. The container of claim 5 or 6 wherein said flanges are disposed within said slot and wherein said flexible air-tight bag is disposed between said strips.

8. The container of claim 5, 6 or 7 wherein a maximum width measured between outside surfaces of said flanges is greater than a width of an entrance to said slot.

9. The container of any one of claims 5 to 8 wherein said slot is C-shaped.

10. The container of any one of claims 5 to 9 wherein said slot comprises a flexible material.

11. The container of any one of claims 5 to 10 wherein said flanges comprise a flexible material.

## Patentansprüche

1. Einwegventil, das folgendes umfasst:
einen Ventilkörper (16), der einen Luftdurchlass (24a, 24b) aufweist;
eine biegsame Membran (26), die an dem genannten Ventilkörper befestigt ist und den genannten Luftdurchgang abdeckt, wobei die genannte Membran angeordnet ist, um Luft nur in einer Richtung durch den genannten Luftdurchgang hindurch strömen zu lassen; und
ein ringförmiges Element (23), das aus einem federnden Material gebildet und an dem genannten Ventilkörper befestigt ist, wobei das genannte ringförmige Element so angepasst ist, dass es mit einem zylindrischen Aufsatz (14) eines Staubsaugers eine Dichtung bildet, wenn der genannte Aufsatz an einer unterstromigen Seite des genannten Luftdurchgangs von Hand auf das genannte Element aufgedrückt wird, wodurch der genannte Staubsauger Luft durch den genannten Luftdurchgang saugen kann, wobei das genannte ringförmige Element von dem genannten Ventilkörper so gestützt wird, dass eine Oberfläche des genannten ringförmigen Elements allgemein flach ist, wenn der genannte zylindrische Aufsatz auf das genannte Element aufgedrückt wird, wobei das genannte ringförmige Element die genannte biegsame Membran umgibt, wobei die genannte biegsame Membran innerhalb des genannten ringförmigen Elements größenmäßig passend und positioniert ist, damit die genannte biegsame Membran so funktionieren kann, dass der genannte Luftdurchgang geöffnet und geschlossen wird, wenn ein zylindrischer Aufsatz mit einem Durchmesser, der in einem ausgewählten Durchmesserbereich liegt, auf das genannte Element aufgedrückt wird.

2. Ventil nach Anspruch 1, bei dem der genannte ausgewählte Durchmesserbereich von ungefähr 2,22 cm (sieben achtel Zoll) bis ungefähr 2,54 cm (ein Zoll) reicht.

3. Einwegventil nach Anspruch 1 oder 2, das folgendes umfasst:
eine Mehrzahl von Lamellen (25) auf einer oberstromigen Seite des genannten Ventilkörpers zum Verhindern, dass der genannte Luftdurchgang verstopft wird, wenn Luft durch den genannten Luftdurchgang gesaugt wird.

4. Behälter, der folgendes umfasst:
a) einen flexiblen luftdichten Beutel (4) mit einer Öffnung (12) zum Einfügen eines aufzubewahrenden Gegenstands in den genannten Beutel;
b) einen ersten luftdichten Verschluss (8) quer über die genannte Öffnung; und
c) ein Einwegventil nach einem der vorangehenden Ansprüche.

5. Behälter nach Anspruch 4, bei dem der genannte erste luftdichte Verschluss folgendes aufweist:
a) einen ersten Streifen (111), einen in den genannten Streifen eingeformten Schlitz (110); und
b) einen zweiten Streifen (113) mit einem Flanschpaar (114A, 114B); wobei die genannten Flansche und der genannte Schlitz größenmäßig so bemessen sind, dass die genannten Flansche in den genannten Schlitz passen.

6. Behälter nach Anspruch 5, bei dem an einer Innenfläche des genannten Schlitzes eine Rippe (112) angeformt ist, wobei die genannte Rippe parallel zu dem genannten Schlitz verläuft, und bei dem die Enden der genannten Flansche jeweils auf einander gegenüberliegenden Seiten der genannten Rippe positioniert sind, wenn die genannten Flansche in dem genannten Schlitz angeordnet sind, wobei der Schlitz und/oder die genannten Flansche ein biegsames Material aufweisen.

7. Behälter nach Anspruch 5 oder 6, bei dem die genannten Flansche in dem genannten Schlitz angeordnet sind und bei dem der genannte flexible luftdichte Beutel zwischen den genannten Streifen angeordnet ist.

8. Behälter nach Anspruch 5, 6 oder 7, bei dem eine zwischen den Außenseiten der genannten Flansche gemessene maximale Breite größer als eine Breite einer Eingangsöffnung zu dem genannten Schlitz ist.

9. Behälter nach einem der Ansprüche 5 bis 8, bei dem der genannte Schlitz C-förmig ist.

10. Behälter nach einem der Ansprüche 5 bis 9, bei dem der genannte Schlitz ein biegsames Material aufweist.

11. Behälter nach einem der Ansprüche 5 bis 10, bei dem die genannten Flansche ein biegsames Material aufweisen.

## Revendications

1. Une soupape à passage direct englobant :
un corps de soupape (16) qui contient un passage d'air (24a, 24b) ;
un diaphragme souple (26) fixé audit corps de soupape et qui recouvre ledit passage d'air, ledit diaphragme étant agencé pour laisser l'air traverser ledit passage d'air dans une seule direction ; et
un élément annulaire (23) formé en un matériau élastique et fixé audit corps de soupape, ledit élément annulaire étant adapté de façon à former un joint étanche avec un accessoire cylindrique (14) d'un aspirateur lorsque ledit accessoire est pressé manuellement contre ledit élément sur un côté aval dudit passage d'air, ce qui permet audit aspirateur d'attirer de l'air à travers ledit passage d'air, ledit élément annulaire étant supporté par ledit corps de soupape de façon telle qu'une surface dudit élément annulaire est généralement plate lorsque ledit accessoire cylindrique est pressé contre ledit élément, ledit élément annulaire entourant ledit diaphragme souple, ledit diaphragme souple étant dimensionné et positionné à l'intérieur dudit élément annulaire de façon telle que ledit diaphragme souple peut fonctionner de manière à ouvrir et à fermer ledit passage d'air lorsqu'un accessoire cylindrique ayant un diamètre compris dans une plage sélectionnée de diamètres est pressé contre ledit élément.

2. La soupape selon la revendication 1, dans laquelle ladite plage sélectionnée de diamètres est d'environ 2,22 cm (sept huitièmes de pouce) à environ 2,54 cm (un pouce).

3. Une soupape à passage direct telle que revendiquée à la revendication 1 ou 2, englobant :
une pluralité de palettes (25) sur un côté amont dudit corps de soupape pour empêcher ledit passage d'air d'être bloqué pendant que l'air est attiré à travers ledit passage d'air.

4. Un récipient englobant :
a) un sac souple étanche à l'air (4) ayant une ouverture (12) pour introduire à l'intérieur dudit sac un article à conserver ;
b) un premier joint étanche à l'air (8) en travers de ladite ouverture ; et
c) une soupape à passage direct telle que revendiquée à l'une quelconque des revendications précédentes.

5. Le récipient selon la revendication 4, dans lequel ledit premier joint étanche à l'air englobe :
a) une première bande (111), une encoche (110) étant formée dans ladite bande ; et
b) une seconde bande (113) ayant une paire de brides (114A, 114B) ; lesdites brides et ladite encoche étant dimensionnées de façon telle que lesdites brides s'adaptent à l'intérieur de ladite encoche.

6. Le récipient selon la revendication 5, dans lequel une nervure (112) est formée sur une surface intérieure de ladite encoche, ladite nervure étant parallèle à ladite encoche, et dans laquelle les extrémités respectives desdites brides sont positionnées sur des côtés opposés de ladite nervure lorsque lesdites brides sont disposées à l'intérieur de ladite encoche, ladite encoche et/ou lesdites brides étant composées d'un matériau souple.

7. Le récipient selon la revendication 5 ou 6, dans lequel lesdites brides sont disposées à l'intérieur de ladite encoche et dans lequel ledit sac souple étanche à l'air est disposé entre lesdites bandes.

8. Le récipient selon la revendication 5, 6 ou 7, dans lequel une largeur maximum mesurée entre les surfaces extérieures desdites brides est plus grande qu'une largeur d'une entrée de ladite encoche.

9. Le récipient selon l'une quelconque des revendications 5 à 8, dans lequel ladite encoche est en forme de C.

10. Le récipient selon l'une quelconque des revendications 5 à 9, dans lequel ladite encoche est composée d'un matériau souple.

11. Le récipient selon l'une quelconque des revendications 5 à 10, dans lequel lesdites brides sont composées d'un matériau souple.
